(19) Europäisches Patentamt
European Patent Office
Office européen des brevets

(11) **EP 2 930 198 B1**

(12) **EUROPÄISCHE PATENTSCHRIFT**

(45) Veröffentlichungstag und Bekanntmachung des Hinweises auf die Patenterteilung:
**26.08.2020   Patentblatt 2020/35**

(21) Anmeldenummer: **15162609.0**

(22) Anmeldetag: **07.04.2015**

(51) Int Cl.:
*C08G 18/38* (2006.01)       *C08G 18/79* (2006.01)
*C08G 18/42* (2006.01)       *C08G 18/73* (2006.01)
*C08G 18/76* (2006.01)       *C09D 11/30* (2014.01)
*C09D 175/02* (2006.01)      *C09D 175/06* (2006.01)
*C08G 18/75* (2006.01)       *B29C 67/00* (2017.01)
*B29K 75/00* (2006.01)       *B41M 3/16* (2006.01)
*B41M 3/00* (2006.01)        *C09D 11/102* (2014.01)
*C09D 11/322* (2014.01)      *C09D 11/54* (2014.01)
*C08K 5/00* (2006.01)        *C08G 18/32* (2006.01)
*B33Y 70/00* (2020.01)       *B29C 64/112* (2017.01)
*B41M 5/00* (2006.01)

(54) **VERDRUCKBARES MEHRKOMPONENTENSYSTEM**

PRINTABLE MULTICOMPONENT SYSTEM

SYSTÈME IMPRIMABLE À PLUSIEURS COMPOSANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2014   EP 14163670**

(43) Veröffentlichungstag der Anmeldung:
**14.10.2015   Patentblatt 2015/42**

(73) Patentinhaber: **Covestro Deutschland AG**
**51373 Leverkusen (DE)**

(72) Erfinder:
• **Tillack, Jörg**
**42699 Solingen (DE)**
• **Achten, Dirk**
**51375 Leverkusen (DE)**
• **Büsgen, Thomas**
**51063 Köln (DE)**
• **Gertzmann, Rolf**
**51377 Leverkusen (DE)**
• **Wagner, Roland**
**51375 Leverkusen (DE)**
• **Schuster, Fabian**
**70374 Stuttgart (DE)**
• **Eiden, Stefanie**
**51371 Leverkusen (DE)**
• **Steffens, Ingo**
**51379 Leverkusen (DE)**

(74) Vertreter: **Levpat**
**c/o Covestro AG**
**Gebäude 4825**
**51365 Leverkusen (DE)**

(56) Entgegenhaltungen:
**WO-A1-2013/165946       US-A1- 2003 118 739**
**US-A1- 2005 075 477**

**Beschreibung**

Die vorliegende Erfindung betrifft ein verdruckbares Mehrkomponentensystem umfassend wenigstens eine Isocyanat-Komponente und wenigstens eine isocyanat-reaktive Komponente, wobei die Isocyanat-Komponente wenigstens eine Verbindung mit aliphatisch gebundenen Isocyanat-Gruppen und die isocyanat-reaktive Komponente wenigstens eine Verbindung mit isocyanat-reaktiven Gruppen umfasst. Weiterhin betrifft die Erfindung ein Verfahren zum Verdrucken des Mehrkomponentensystems, sowie ein nach dem erfindungsgemäßen Verfahren erhältliches Druckprodukt.

Im Stand der Technik sind verschiedene Zwei- oder Mehrkomponentensysteme beschrieben, die verdruckt werden können, wie in WO 2013/165946 beschrieben. So ist beispielsweise aus der DE 199 37 770 A1 ein Zweikomponentensystem bekannt, dass eine Isocyanat-Komponente und eine isocyanat-reaktive Komponente umfasst. Von beiden Komponenten werden Tropfenstrahlen erzeugt, die so ausgerichtet werden, dass sie sich zu einem gemeinsamen Tropfenstrahl vereinigen. In dem gemeinsamen Tropfenstrahl setzt die Reaktion der Isocyanat-Komponente mit der isocyanat-reaktiven Komponente ein. Der gemeinsame Tropfenstahl wird auf ein Trägermaterial gelenkt, wo er unter Ausbildung eines polymeren Polyurethans zum Aufbau eines dreidimensionalen Körpers verwendet wird.

Bei dem Zweikomponentensystem des Standes der Technik treten jedoch verschiedene Probleme auf: So werden in der DE 199 37 770 A1 insbesondere Isocyanat-Komponenten verwendet, die Verbindungen mit aromatisch gebundenen Isocyanat-Gruppen umfassen. Derartige Verbindungen können allerdings bereits bei relativ kurzen Druckunterbrechungen von weniger als 16 Stunden einzelne Düsen des Druckkopfes verstopfen. Gefordert wird allerdings die Möglichkeit einer Unterbrechung von mindestens 16 Stunden, um bei einem Einschichtbetrieb den Drucker am nächsten Tag direkt wieder in Betrieb nehmen zu können.

Weiterhin hat es sich als schwierig herausgestellt, eine gute Mischbarkeit der Isocyanat-Komponente mit der isocyanat-reaktiven Komponente bei gleichzeitig ausreichend hoher Aushärtungsgeschwindigkeit des Zweikomponentensystems sicher zu stellen. So kann es bei einer an sich gewünschten hohen Aushärtungsgeschwindigkeit dazu kommen, dass sich die Tröpfchen der Isocyanat-Komponente und der isocyanat-reaktive Komponente nicht vollständig mischen, da sich an der Grenzfläche schnell ein Polymer als Reaktionsprodukt bildet, das dann eine weitere Vermischung verhindert. Umgekehrt besteht bei einer zu geringen Aushärtungsgeschwindigkeit die Gefahr, dass der auf das Trägermaterial aufgebrachte gemeinsame Tropfenstrahl dort verläuft und/oder spreitet (keine Tropfenform aufweist). Ebenso wird durch eine zu geringe Aushärtungsgeschwindigkeit die Produktivität des Druckverfahrens erheblich reduziert.

Es bestand somit ein Bedarf für ein verdruckbares Mehrkomponentensystem, das insbesondere bei einer Applikation in Tröpfchenform eine gute Mischbarkeit bei gleichzeitig hoher Aushärtungsgeschwindigkeit aufweist und darüber hinaus verdruckt werden kann, ohne dass es auch bei längeren Unterbrechungen des Druckvorgangs zu einer Verstopfung des Druckkopfs kommt.

Das Mehrkomponentensystem soll zudem dazu geeignet sein dreidimensionale Körper herzustellen, aber auch auf verschiedenen gängigen Substrate als gleichmäßige Beschichtung aufgedruckt zu werden.

Insbesondere diese Anforderungen werden bei den im Stand der Technik, beispielsweise in der DE 102008024352 A1, EP 0403921 A1 und US2003/0118739 A1, genannten Mehrkomponentensystemen zur Oberflächenbeschichtung nicht erfüllt.

Aufgabe der Erfindung war es daher, ein verdruckbares Mehrkomponentensystem bereitzustellen, dass den genannten Anforderungen entspricht.

Diese Aufgabe ist bei einem verdruckbaren Mehrkomponentensystem der eingangs genannten Art dadurch gelöst, dass eine Mischung der Isocyanat-Komponente und der isocyanat-reaktiven Komponente eine Topfzeit bei einer Temperatur von 23 °C von ≤ 30 Minuten aufweist, die Isocyanat-Komponente und die isocyanat-reaktive Komponente jeweils eine Standzeit von ≥ 16 Stunden bei 20 °C und 50% relativer Luftfeuchte aufweisen, die Isocyanat-Komponente und die isocyanat-reaktive Komponente jeweils eine bei 70 °C und einer konstanten Scherrate von 100 1/s gemessene Viskosität von ≤ 100 mPa·s, aufweisen und der Abstand Ra zwischen dem Hansen Löslichkeitsparameter der Verbindung mit aliphatisch gebundenen Isocyanat-Gruppen oder gegebenenfalls einer Mischung aller Verbindung mit Isocyanat-Gruppen und dem Hansen Löslichkeitsparameter der Verbindung mit isocyanat-reaktiven Gruppen oder gegebenenfalls einer Mischung aller Verbindung mit isocyanat-reaktiven Gruppen ≤ 25 ist und wobei die Oberflächenspannung der Isocyanat und/oder isocyanat-reaktiven Komponente ≤ 30 mN/m bei 20 °C ist.

Im Rahmen der vorliegenden Erfindung wird unter Topfzeit die Zeit verstanden, in der sich die Viskosität einer Mischung aus der Isocyanat-Komponente und der isocyanat-reaktiven Komponente bei einer Temperatur von 23 °C verdoppelt.

Eine Topfzeit von ≤ 30 Minuten hat einen großen Einfluss darauf, dass das Mehrkomponentensystem eine gute Mischbarkeit bei gleichzeitig hoher Aushärtungsgeschwindigkeit aufweist, so dass ein effizientes Druckverfahren möglich ist.

Für die Bestimmung der Topfzeit wurde die Messung der komplexen Viskosität als Funktion der Reaktionszeit bestimmt. Dafür wurde ein Rheometer der Fa. Physica MCR 301 mit Platte/Platte-Messsystem PP50 verwendet. Dieses Messsystem oszilliert während der Vernetzung mit der Kreisfrequenz 6,28 1/s, dabei wurden aus der Kraft/Weg - Amplitude die komplexe Viskosität Eta*, der Speichermodul G' und der Verlustmodul G" bestimmt.

Für die Viskositätsmessung wurde ein Gesamtansatz der Komponenten von 7 g angesetzt. Nach Zugabe der zweiten Komponente wurde mit einem Spatel 45 s mit der Hand gemischt, die Probe in das Rheometer eingefüllt, das Messsystem zusammen gefahren und die Messung gestartet. Bis zum ersten Messpunkt vergingen nach dem ersten Kontakt der Komponenten 100 Sekunden. Als Topfzeit wurde die Zeit bestimmt, in der sich nach diesen 100 Sekunden Vorbereitungszeit die Viskosität verdoppelte. Für Systeme, die bereits während der Mischphase fest wurden, konnte keine exakte Topfzeit bestimmt werden. Hier würde lediglich angegeben, dass die Topfzeit 0 Sekunden beträgt, da bereits während den 100 Sekunden Vorbereitungszeit eine Verdoppelung der Viskosität erfolgt war.

Im Rahmen der vorliegenden Erfindung wird unter der Standzeit die Zeitspanne angesehen, für die ein Druckvorgang, bei dem die erfindungsgemäßen Komponenten mit einem Druckkopf verdruckt werden, bei 20 °C und 50% relativer Luftfeuchte unterbrochen werden kann, ohne dass die Druckqualität bei Wiederaufnahme des Drucks beeinträchtigt wird. Diese Zeitspanne wurde mit einem Dimatix DMP 2831 unter Verwendung eines DMC11610 Druckkopfes (Druckkopf mit 16 Düsen und einem Nennvolumen der ausgestoßenen Tropfen von 10 pL) ermittelt. Zwischen den Druckvorgängen wurde der Druckkopf in einem Klimaschrank mit der offenen Druckplatte nach oben stehend bei 20 °C und 50 % relative Luftfeuchte gelagert. Nach der Lagerung wurde der Druck ohne vorherige Reinigung wieder fortgesetzt. Hierbei wurde mit Hilfe der eingebauten Kamera (Dropwatcher) jede einzelne Düse auf Funktion geprüft. Als Standzeit wurde die Zeit bestimmt, bei der die Wiederaufnahme des Druckens ohne Beeinträchtigung der Druckqualität noch möglich war.

Eine Standzeit von $\geq$ 16 Stunden hat einen großen Einfluss darauf, dass Unterbrechungen beim Verdrucken ermöglicht werden, ohne dass die Druckqualität durch Verstopfungen der Düsen beeinträchtigt wird.

Die Bestimmung der Messwerte für die Viskosität der Isocyanat-Komponente und der isocyanat-reaktive Komponente erfolgte bei 70 °C und einer konstanten Scherrate von 100 1/s.

Die Messung der Viskosität der Isocyanat-Komponente und der isocyanat-reaktive Komponente wurde mit einem Physica MCR 301 Rheometer in einem Becher/Rotor-Messsystem CC27 durchgeführt.

Um den Einfluss der Schergeschwindigkeit auf die Viskosität der Proben zu beschreiben, wurde eine Schergeschwindigkeitsrampe im Bereich von 0,1 bis 1000 1/s bei 23°C gemessen. Für die Bestimmung der Temperaturabhängigkeit wurden die Proben bei der konstanten Scherrate von 100 1/s geschert und die Viskosität im Bereich von 23°C bis 70°C aufgenommen. Die Temperaturrampe wurde mit 2°C/Minute vorgegeben und alle 30 Sekunden ein Messwert aufgenommen.

Die Hansen Löslichkeitsparameter beschreiben die Kohäsionsenergie von Flüssigkeiten und Polymeren. Nach Handbook - "Hansen Solubility Parameters: A User's Handbook", CRC Press, Inc., Boca Raton FL, 2007. ISBN: 9780849372483 kann die Kohäsionsenergie in mindestens drei Anteile aufgeteilt werden, nämlich solchen durch nichtpolare (Dispersions-) Wechselwirkungen ($E_D$), Dipol-Wechselwirkungen (Ep) und Wasserstoffbrücken-Bindungen ($E_H$). Der Quotienten aus diesen Energien und dem molare Volumen (V) des Stoffes ergibt die Quadrate der entsprechenden Hansen Löslichkeitsparameter:

$\delta^2 D = E_D/V$, $\delta^2 P = E_P/V$ und $\delta^2 H = E_H/V$.

Die Quadrate der Hansen-Löslichkeitsparameter summieren sich zum Quadrat der gesamten (totalen) Kohäsionsenergie. Die Wurzel aus dieser ist der Hildebrand Löslichkeitsparameter $\delta_t$. Der Abstand (Ra) zwischen den Hansen Löslichkeitsparametern ist definiert durch:

$$\mathrm{Ra}^2 = 4(\delta D_1 - \delta D_2)^2 + (\delta P_1 - \delta P_2)^2 + (\delta H_1 - \delta H_2)^2$$

Für die Isocyanat-Komponente und die isocyanat-reaktiven Komponente können die Hansen Löslichkeitsparameters entweder in Tabellenwerken nachgeschlagen, nach z.B. Zeichnung der Strukturformel mit Hilfe des Programms "HSPiP, 4th Edition 4.1.04" berechnet oder durch den Einsatz verschiedener Lösungsmittel wie in dem Handbuch zum Programm beschrieben, bestimmt / ermittelt werden.

Die Oberflächenspannungswerte der verwendeten Flüssigkeiten wurden mit einem K 12 Tensiometer der Fa. Krüss gemäß DIN EN 14370:2004-11 (Beschreibung der Messung mit Platte) ermittelt. Es wurde die Messmethode nach Wilhelmy mit einem Platte-System bei einer Messtemperatur von 23 °C verwendet. Dabei wird die Kraft, die sich durch die Benetzung einer senkrecht aufgehängten Platte, die in Berührung mit der Oberfläche der zu untersuchenden Flüssigkeit gebracht wird, ergibt, bestimmt. Gemessen wird die Kraft F die notwendig ist, um die auf die Platte senkrecht nach unten wirkende Komponente der Oberflächenkraft zu kompensieren und die Platte in ihrer ursprünglichen Position zu halten. Bei der Messung der Oberflächenspannung wird eine Platte aus Platin verwendet.

Vorteilhaft weisen die Isocyanat-Komponente und/oder die isocyanat-reaktive Komponente eine Oberflächenspannung bei 23 °C von $\leq$ 28 mN/m, bevorzugt von $\leq$ 26 mN/m auf.

Weiterhin vorteilhaft weisen die Isocyanat-Komponente und/oder die isocyanat-reaktive Komponente eine Oberflächenspannung bei 23 °C von $\geq$ 10 mN/m, bevorzugt von $\geq$ 15 mN/m und besonders bevorzugt von $\geq$ 20 mN/m auf.

Besonders vorteilhaft weisen die Isocyanat-Komponente und die isocyanat-reaktive Komponente eine Oberflächenspannung bei 23 °C von $\leq$ 28 mN/m, bevorzugt von $\leq$ 26 mN/m auf.

Weiterhin besonders vorteilhaft weisen die Isocyanat-Komponente und/oder die isocyanat-reaktive Komponente eine Oberflächenspannung bei 23 °C von $\geq$ 10 mN/m, bevorzugt von $\geq$ 15 mN/m und besonders bevorzugt von $\geq$ 20 mN/m auf.

Die Oberflächenspannung kann dabei durch zahlreiche Additive und Zusatzstoffe beeinflusst werden, wie beispielsweise Lösungsmittel, Pigmente, Netzmittel und Oberflächenspannungsmodifikationsmittel.In einer vorteilhaften Ausgestaltung der Erfindung enthalten die Isocyanat-Komponente und/oder die isocyanat-reaktive Komponente daher Netzmittel und/oder Oberflächenspannungsmodifikationsmittel, insbesondere solche auf Siliconbasis, wie sie beispielsweise von der Firma ALTANA AG unter den Handelsnamen BYK 141, BYK 331 und BYK 307 angeboten werden.

Unter aliphatisch gebundenen Isocyanat-Gruppen werden Isocyanat-Gruppen verstanden, die an einen aliphatischen Kohlenwasserstoffrest gebunden sind.

Als Verbindungen mit aliphatisch gebundenen Isocyanatgruppen können sowohl monomere, Isocyanat-Gruppen enthaltende Verbindungen, als auch polymere Modifikationen dieser Isocyanate, sowie deren Mischungen verwendet werden.

Geeignete monomere Verbindungen mit aliphatisch gebundenen Isocyanat-Gruppen sind beliebige durch Phosgenierung oder nach phosgenfreien Verfahren, beispielsweise durch thermische Urethanspaltung, zugängliche aliphatische Isocyanate. Bevorzugte Isocyanate sind solche des Molekulargewichtsbereichs 140 bis 336 g/mol, wie z.B. die linearaliphatischen Diisocyanate 1,4-Diisocyanatobutan (BDI), 1,5-Pentandiisocyanat, (PDI) 1,6-Diisocyanatohexan (HDI), 1,3-Bis(isocyanatomethyl)benzol (1,3-Xylylendiisocyanat, XDI), 1,4-Bis(isocyanatomethyl)benzol (1,4-Xylylendiisocyanat, XDI), 1,3-Bis(1-isocyanato-1-methyl-ethyl)benzol (TMXDI), 1,4-Bis(1-isocyanato-1-methyl-ethyl)benzol (TMXDI), 4-Isocyanatomethyl-1,8-octandiisocyanat (Trisisocyanatononan (TIN)), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan sowie die cycloaliphatischen Diisocyanate 1,3-bzw. 1,4-Diisocyanatocyclohexan, 1,4-Diisocyanato-3,3,5-trimethylcyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 1-Isocyanato-1-methyl-4(3)isocyanato-methylcyclohexan, 1,8-Diisocyanato-p-menthan, 4,4'-Diisocyanato-1,1'-bi(cyclohexyl), 4,4'-Diisocyanato-3,3'-dimethyl-1,1 '-bi(cyclohexyl), 4,4'-Diisocyanato-2,2',5,5'-tetramethyl-1,1'-bi(cyclohexyl), 4,4'- und/oder 2,4'-Diisocyanatodicyclohexylmethan, 4,4'-Diisocyanato-3,3'-dimethyldicyclohexylmethan, 4,4'-Diisocyanato-3,3',5,5'-tetramethyldicyclohexylmethan, 1,3-Diisocyanatoadamantan, und 1,3-Dimethyl-5,7-diisocyanatoadamantan oder beliebige Gemische solcher Isocyanate.

Bei der Isocyanat-Komponente kann es sich auch um beliebige, durch Modifizierung aliphatischer Isocyanate hergestellte, aus mindestens zwei monomeren Verbindungen mit aliphatisch gebundenen Isocyanat-Gruppen aufgebaute polymere Isocyanate mit Uretdion-, Isocyanurat-, Allophanat-, Biuret-, Iminooxadiazindion- und/oder Oxadiazintrionstruktur handeln, wie sie beispielsweise in J. Prakt. Chem. 336 (1994) 185 - 200, in DE-A 1 670 666, EP-A 0 798 299 und EP-A 0 649 866 beispielhaft beschrieben sind. Auch eine beliebige Mischung der oben genannten aliphatischen Isocyanate können zur Herstellung der polymeren Isocyanate eingesetzt werden.

Bevorzugt werden im Rahmen dieser Erfindung als Isocyanat-Komponente HDI, IPDI, 1,3-Diisocyanato-2(4)-methylcyclohexan, 4,4'- und/oder 2,4'-Diisocyanatodicyclohexylmethan oder deren Modifizierungen mit Uretdion-, Isocyanurat-, Allophanat-, Biuret- und/oder Iminooxadiazindionstruktur, sowie Gemische der genannten Verbindungen eingesetzt.

Besonders bevorzugt enthält die Isocyanat-Komponente HDI oder Modifikationen von HDI, die Uretdion-, Isocyanurat-, Allophanat-, Biuret- und/oder Iminooxadiazindionstruktur aufweisen, oder besteht daraus. Ganz besonders enthält die Isocyanat-Komponente b) Modifikationen von HDI, die Uretdion-, Isocyanurat-, Allophanat-, Biuret- und/oder Iminooxadiazindionstruktur aufweisen, oder besteht daraus.

Die Summe der in der Isocyanat-Komponente enthaltenden Verbindungen mit Isocyanat-Gruppen weisen in der Regel eine zahlenmittlere NCO-Funktionalität von $\geq$ 1,5, bevorzugt $\geq$2, besonders bevorzugt $\geq$2,5 und ganz besonders bevorzugt $\geq$ 3,0 auf.

Es ist ebenfalls möglich, dass die Isocyanat-Komponente Gemische verschiedener Verbindungen mit aliphatisch gebundenen Isocyanat-Gruppen umfasst. Ebenfalls möglich ist, dass die Isocyanat-Komponente auch Verbindungen mit aromatisch gebundenen Isocyanat-Gruppen umfasst, wobei unter aromatisch gebundenen Isocyanat-Gruppen Isocyanat-Gruppen verstanden werden, die an einen aromatischen Kohlenwasserstoffrest gebunden sind. Ganz besonders bevorzugt ist jedoch, wenn die Isocyanat-Komponente und/oder das Mehrkomponentensystem ausschließlich Verbindungen mit aliphatisch gebundenen Isocyanat-Gruppen umfasst. Anders ausgedrückt ist also besonders bevorzugt, wenn die Isocyanat-Komponente und/oder das Mehrkomponentensystem keine Verbindungen mit aromatisch gebundenen Isocyanat-Gruppen umfasst.

Weiterhin ist es möglich, dass die Isocyanat-Komponente aus einer Mischung von Isocyanat-Verbindungen besteht, die bezüglich der Polyurethan(harnstoff)-Bildung unterschiedliche Reaktivitäten aufweisen. Bevorzugt ist auch, wenn der Anteil der Isocyanat-Verbindung, die bezüglich der Polyurethan(harnstoff)-Bildung die höchste Reaktivität aufweist, in der Isocyanat-Komponente den kleinsten Massenanteil aller Isocyanat-Verbindungen ausmacht.

Weiterhin ist es auch möglich, dass die isocyanat-reaktive Komponente aus einer Mischung von isocyanat-reaktiven Verbindungen besteht, die bezüglich der Polyurethan(hamstoff)-Bildung unterschiedliche Reaktivitäten aufweisen. Bevorzugt ist auch, wenn der Anteil der isocyanat-reaktiven Verbindung, die bezüglich der Polyurethan(hamstoff)bildung die höchste Reaktivität aufweist, in der isocyanat-reaktiven Komponente den kleinsten Massenanteil aller isocyanat-reaktiven Verbindungen ausmacht.

Als Isocyanat Verbindungen werden vorliegend alle Verbindungen verstanden, die Isocyanatgruppen aufweisen. Isocyanat-reaktive Verbindungen sind alle Verbindungen, die isocyanat-reaktive Gruppen aufweisen.

Die Reaktivität bezüglich der Polyurethan(harnstoff)-Bildung kann beispielsweise ermittelt werden, indem anlog zur Bestimmung der Topfzeit die zu vergleichenden Verbindungen jeweils mit einem Standard (z.B. Butanol für zu vergleichende Isocyanate oder HDI für zu vergleichende isocyanat-reaktive Verbindungen) umgesetzt werden.

Als isocyanat-reaktive Gruppen werden im Rahmen der vorliegenden Erfindung Epoxid-, Carbonsäure-, Carbonsäueanhydrid-Gruppen oder Gruppen verstanden, die Zerewitinoffaktiven Wasserstoff enthalten. Zur Definition von Zerewitinoff-aktivem Wasserstoff wird auf Römpp Chemie Lexikon, Georg Thieme Verlag Stuttgart verwiesen. Bevorzugt werden unter isocyanat-reaktiven Gruppen OH, NH und/oder SH verstanden.

Beispiele für Verbindung mit isocyanat-reaktiven Gruppen sind ein- zwei, und mehrwertige Alkohole mit primären, sekundären und tertiären OH-Gruppen, analoge Thiole, Polyole, z.B. Polyether-, Polyester-, Polyacrylat-, Polycarbonatpolyole, analoge Polythiole, schwefelhaltige Hydroxyverbindungen, Amine (z.B. primär, sekundär, aliphatisch, cycloaliphatisch, aromatisch, sterisch gehindert), Polyamine und Asparaginsäure Ester.

Alkohole können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), aber auch höhermolekulare Polyhydroxyverbindungen wie Polyetherpolyole, Polyesterpolyole, Polycarbonatpolyole, Polysiloxanpolyole, sowie Polybutadienpolyole sein.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Bernsteinsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymerisation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Amine können beliebige ein- oder mehrwertige Amine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin, Dicyclohexylamin, Hydrazin, Ethylendiamin, 1,2-Diaminopropan, 1,4-Diaminobutan, 2-Methyl-pentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Pyrrolidin, Piperidin, Piperazin, (3-Aminopropyl)-trimethoxysilan, (3-Aminopropyl)-triethoxysilan und (3-Methylamino)propyl-trimethoxysilan, Aminoalkohole, wie z. B. 2-Aminoethanol, 2-Methylaminoethanol, 2-(Dimethylamino)-ethanol, 2-(Diethyl-amino)-ethanol, 2-(Dibutyl-amino)-ethanol, Diethanolamin, N-Methyl-diethanolamin, Triethanolamin, 3-Amino-1-propanol, 3-Dimethylamino-1-propanol, 1-Amino-2-propanol, 1-Dimethylamino-2-propanol, 1-Diethylamino-2-propanol, Bis-(2-hydroxypropyl)-amin, Bis-(2-hydroxypropyl)-methylamin, 2-(Hydroxyethyl)-bis-(2-hydroxypropyl)-amin, Tris-(2-hydroxypropyl)-amin, 4-Amino-2-butanol, 2-Amino-2-methylpropanol, 2-Amino-2-methyl-1,3-propandiol, 2-Amino-2-hydroxypropyl-1,3-propandiol und N-(2-Hydroxyethyl)-piperidin, Etheramine, wie z. B. 2-Methoxyethylamin, 3-Methoxypropylamin, 2-(2-Dime-thylaminoethoxy)-ethanol und 1,4-Bis-(3-aminopropoxy)-butan oder aromatische Di- und Triamine mit wenigstens einem Alkylsubstituenten mit 1 bis 3 Kohlenstoffatomen am aromatischen Ring, wie z. B. 2,4-Toluylendiamin, 2,6-Toluylendiamin, 1-Methyl-3,5-diethyl-2,4-diaminobenzol, 1,3-Diethyl,2,4-diaminobenzol, 1-Methyl-3,5-diethyl-2,6-diaminobenzol, 1,3,5-Triethyl-2,6-diaminobenzol, 3,5,3',5'-tetraethyl-4,4'-diaminodiphenylmethan, 3,3 '-Dimethyl-4,4'-diaminodiphenylmethan, 1-Ethyl-2,4-diaminobenzol, 1-Ethyl-2,6-diaminobenzol, 2,6-Diethylnaphthylen-1,5-diamin, 4,4'-Methylenebis-(2,6-Diisopropylaniline) sein.

Des Weiteren können auch Polyamine, wie z. B. die aus EP-B 0 403 921 bekannten Polyasparaginsäurederivate, oder auch solche Polyamine, deren Aminogruppen in blockierter Form vorliegen, wie z. B. Polyketimine, Polyaldimine oder Oxazolane, verwendet werden. Aus diesen blockierten Aminogruppen entstehen unter Feuchtigkeitseinfluss freie Aminogruppen und im Falle der Oxazolane auch freie Hydroxylgruppen, die unter Vernetzung mit Isocyanatgruppen abreagieren können.

Geeignete aminofunktionelle Komponenten sind insbesondere Polyasparaginsäureester, wie sie beispielsweise nach dem Verfahren der EP-B 0 403 921 durch Umsetzung von Diaminen mit Fumarsäure- bzw. Maleinsäureestern erhältlich sind.

Bevorzugte aminofunktionelle Verbindungen sind Polyetherpolyamine mit 2 bis 4, vorzugsweise 2 bis 3 und besonders bevorzugt 2 aliphatisch gebundenen primären Aminogruppen und einem zahlenmittleren Molekulargewicht Mn von 148 bis 12200, vorzugsweise 148 bis 8200, besonders bevorzugt 148 bis 4000 und ganz besonders bevorzugt 148 bis 2000 g/mol. Besonders geeignete Thiole sind Verbindungen, welche mindestens zwei Thiolgruppen pro Molekül aufweisen.

Bevorzugte Polythiole werden beispielsweise ausgewählt aus der Gruppe, bestehend aus einfachen Alkanthiolen, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol oder 2-Methylcyclohexan-2,3-dithiol, Thioethergruppen enthaltenden Polythiolen, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,1 1-dimercapto-3,6,9-trithiaundecan, 4,7-Dimercaptomethyl-1,1 1-dimer-capto-3,6,9-trithiaundecan, 5,7-Dimercaptomethyl-1,11-dimercapto-3,6,9-trithiaundecan, 5,6-Bis-(mercaptoethylthio)-1,10-dimercapto-3,8-dithiadecan, 4,5-Bis-(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis-(mercaptoethylthio)methan, Tris(mercapto-ethylthio)methan, Bis(mercaptopropylthio)-methan, 1,2-Bis(mercaptomethylthio)ethan, 1,2-Bis-(mercaptoethylthio)ethan, 2-Mercapto-ethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercapto-ethylthio)propan, 1,2,3-Tris(mercaptopropylthio)propan, Tetrakis(mercaptomethylthio)methan, Tetrakis(mercap-toethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian oder 2-(3-Bis(mercaptomethyl)-2-thiapropyl)-1,3-dithiolan, Polyesterthiolen, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3-mercaptopropionat), Trimethylolethan-tris(2-mercaptoacetat), Tri-methylolethan-tris(3-mercaptopropionat), Pentaerythrit-tetrakis(2-mercaptoacetat), Pentaerythrit-tetrakis(3-mercaptopropionat), Glycerintris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxy-methylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisul-fid(2-mercaptoacetat), Hydroxymethyldisulfid(3-mercaptopropionat), (2-Mercaptoethyl-ester)thioglycolat oder Bis(2-mercaptoethylester)thiodipropionat und aromatischen Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)-benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)-benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercapto-benzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrakis(mercapto-ethyl)benzol, 1,2,3,5-Tetrakis-(mercaptoethyl)benzol, 1,2,4,5-Tetrakis(mercaptoethyl)benzol, 2,2'-Dimercaptobiphenyl oder 4,4'-Dimercaptobiphenyl. Solche Polythiole können einzeln oder auch in Form beliebiger Gemische untereinander verwendet werden.

Ebenso sind auch Schwefel enthaltende Hydroxyverbindungen geeignet. Solche Verbindungen enthalten bevorzugt mindestens ein Schwefel-Atom in Form von Thiogruppen, Thioethergruppen, Thioesterurethangruppen, Esterthiourethangruppen und/oder Polythioesterthiourethangruppen sowie mindestens eine OH-Gruppe.

Bevorzugte Schwefel enthaltende Hydroxyverbindungen können ausgewählt werden aus der Gruppe, bestehend aus einfachen Mercaptoalkoholen, wie z. B. 2-Mercaptoethanol, 3-Mercaptopropanol, 1,3-Dimercapto-2-propanol, 2,3-Dimercaptopropanol oder Dithioerythritol, Thioetherstrukturen enthaltenden Alkoholen, wie z. B. Di(2-hydroxyethyl)sulfid, 1,2-Bis(2-hydroxyethylmercapto)ethan, Bis(2-hydroxyethyl)disulfid oder 1,4-Dithian-2,5-diol, und Schwefel enthaltende Diole mit Polyesterurethan-, Polythioesterurethan-, Polyesterthiourethan- oder Polythioesterthiourethanstruktur der in der EP-A 1 640 394 genannten Art. Solche Schwefel enthaltenden Hydroxyverbindungen können einzeln oder auch in Form beliebiger Gemische untereinander verwendet werden.

Besonders bevorzugte Schwefel enthaltende Verbindungen sind Polyether- und Polyesterthiole der genannten Art. Ganz besonders bevorzugte Verbindungen können ausgewählt werden aus der Gruppen, bestehend aus 4-Mercaptomethyl-1,8-dimercapto-3,6-dithiaoctan, 1,1,3,3-Tetrakis(mercaptomethylthio)propan, 5,7-Dimercaptomethyl-1,11-dimercapto-3,6,9-trithia-undecan, 4,7-Dimercaptomethyl-1,11-dimercapto-3,6,9-trithiaundecan, 4,8-Dimercaptomethyl-1,1 1-dimercapto-3,6,9-trithiaundecan, Trimethylolpropan-tris(2-mercaptoacetat), Trimethylolpropan-tris(3-mercaptopropionat), Pentaerythrit-tetrakis(2-mercaptoacetat) und Pentaerythrit-tetrakis(3-mercaptopropionat).

Ebenso sind auch Carbonsäuren, Carbonsäureanhydride und Epoxide als Verbindungen mit isocyanat-reaktiven Gruppen geeignet.

Es ist ebenfalls möglich, dass die isocyanat-reaktive Komponente Gemische verschiedener Verbindungen mit isocyanat-reaktiven-Gruppen umfasst.

Die Summe der in der Isocyanat-reaktiven Komponente enthaltenden Verbindungen mit Isocyanat-reaktiven Gruppen weisen eine zahlenmittlere Funktionalität an isocyanat-reaktiven Gruppen von ≥ 1,5, bevorzugt ≥ 2, besonders bevorzugt ≥ 2,5 und ganz besonders bevorzugt von ≥ 3,0 auf.

Das Verhältnis der Isocyanat-Gruppen zu den isocyanat-reaktiven Gruppen des erfindungsgemäßen Mehrkomponentensystems beträgt 0,5 bis 2,0, bevorzugt 0,85 bis 1,5 und besonders bevorzugt 0,95 bis 1,1.

Gemäß einer weiteren bevorzugten Ausführungsform der Erfindung können die Isocyanat-Komponente und die isocyanat-reaktiven Komponente jeweils eine bei 70 °C gemessene Viskosität von ≤ 50 mPa·s, bevorzugt ≤ 30 mPa·s, besonders bevorzugt ≤ 20 mPa·s und ganz besonders bevorzugt ≤ 15 mPa·s aufweisen.

In Weiterbildung der Erfindung ist vorgesehen, dass die Mischung der Isocyanat-Komponente und der isocyanat-reaktiven Komponente eine Topfzeit bei einer Temperatur von bevorzugt ≤ 10 Minuten, besonders bevorzugt von ≤ 1 Minute und ganz besonders bevorzugt von ≤ 10 Sekunden aufweist.

Vorteilhaft ist auch, wenn der Abstand Ra ≥ 8, bevorzugt ≥ 12, besonders bevorzugt ≥ 16 ist.

Die Isocyanat-Komponente und die isocyanat-reaktive Komponente können insbesondere jeweils eine Standzeit ≥ 20 Stunden, bevorzugt ≥ 24 Stunden, besonders bevorzugt ≥ 32 Stunden und ganz besonders bevorzugt ≥ 48 Stunden aufweisen.

Das Mehrkomponentensystem kann auch zusätzlich einen Katalysator umfassen, der die Reaktion der Isocyanat-Gruppen mit den isocyanat-reaktiven Gruppen beschleunigt.

Beispielhaft seien als geeignete Katalysatoren Wasser, tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethyl-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyc-lo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyl-diethanolamin, N-Ethyl-diethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat genannt.

Bevorzugt einzusetzende Katalysatoren sind tertiäre Amine, Zinn-, Zink und Wismutverbindungen der genannten Art.

Die Katalysatoren können entweder der Isocyanat-Komponente und/oder der isocyanat-reaktiven Komponente einzeln oder in Form beliebiger Mischungen untereinander zugesetzt werden und können dabei, falls überhaupt, in Mengen von 0,001 bis 3,0 Gew.-%, bevorzugt 0,005 bis 1,5 Gew.-% und besonders bevorzugt 0,01 bis 1,0 Gew.-%, berechnet als Gesamtmenge an eingesetzten Katalysatoren bezogen auf die Gesamtmenge der verwendeten isocyanat und isocyanat-reaktiven Gruppen enthaltenden Verbindungen, eingesetzt werden.

Weiterhin kann die Isocyanat-Komponente und/oder die isocyanat-reaktive Komponente ein Lösungsmittel enthalten.

Beispiele für geeignete Lösungsmittel sind solche, die sich gegenüber der Isocyanatgruppen inert verhalten, beispielsweise die bekannten üblichen aprotischen Lacklösungsmittel, wie z. B. Ethylacetat, Isopropylacetat, Butylacetat, Isobutylacetat, Amylacetat, 2-Ethylhexylacetat, Ethylenglykolmonomethyletheracetat, Ethylenglykolmonoethyletheracetat, Ethylenglykolmonobutyletheracetat, 1-Methoxypropyl-2-acetat, 3-Methoxy-n-butylacetat, Aceton, Diethylketon, 2-Butanon, 4-Methyl-2-pentanon, Diisobutylketon, Cyclohexanon, Cyclohexan, Toluol, Xylol, Chlorbenzol, Dichlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösungsmittel wie Propylenglykoldiacetat, Diethylenglykoldimethylether, Dipropylenglykoldimethylether, Diethylenglykolethyl- und - butyletheracetat, Ethylethoxypropionat, Propylencarbonat, N-Methylpyrrolidon und N-Methylcaprolactam, Dioxan, Tetrahydrofuran, 1,1,2,2-Tetramethoxyethan oder beliebige Gemische solcher Lösungsmittel.

Besonders bevorzugte Lösungsmittel sind Ethylacetat, Isopropylacetat, Butylacetat, 1-Methoxypropyl-2-acetat, Aceton, Diethylketon, 2-Butanon, Cyclohexanon, Cyclohexan, Toluol, Xylol, Testbenzin, Propylencarbonat, N-Methylpyrrolidon und N-Methylcaprolactam, Dioxan, Tetrahydrofuran oder beliebige Gemische solcher Lösungsmittel.

Der Anteil des Lösungsmittels in der Isocyanat-Komponente und/oder der isocyanat-reaktive Komponente kann ≤ 80 Gew.-%, bevorzugt ≤ 50 Gew.-%, besonders bevorzugt ≤ 10 Gew.-% und ganz besonders bevorzugt ≤ 1 Gew.-% betragen. In einer vorteilhaften Ausführungsform ist die Isocyanat-Komponente und/oder die isocyanat-reaktive Komponente frei von Lösungsmitteln.

Weiterhin kann das Mehrkomponentensystem Additive und Hilfsstoffe umfassen. Diese können in der Isocyanat-Komponente und/oder in der isocyanat-reaktive Komponente enthalten sein oder eine weitere Komponente des Mehrkomponentensystems darstellen.

Beispiele für Additive sind Rheologieverbesserer, Stabilisatoren, UV-Schutzmittel, Hydrolyseschutzmittel, Emulgatoren, Füllstoffe, Farbstoffe und/oder Farbpigmente, gegebenenfalls einbaufähiger Farbstoffe (die also über Zerewitinoff-aktive Wasserstoffatome verfügen) und/oder Farbpigmente. Möglich ist auch eine Zugabe von Zeolithen.

Bevorzugte Hilfsstoffe sind Treibmittel, Füllstoffe, Kreide, Ruß oder Zeolithe, Flammschutzmittel, Farbpasten, Wasser, Mikrobenschutzmittel, Fließverbesserer, Thixotropiermittel und Oberflächenmodifizierungsmittel. Weitere Hilfsstoffe umfassen Entschäumer, Emulgatoren, Verbindung zur Einstellung der Oberflächenspannung und Zellregler. Eine Übersicht entsprechender Stoffe ist in G. Oertel, Polyurethane Handbook, 2nd Edition, Carl Hanser Verlag, München, 1994, Kap. 3.4., enthalten.

Gemäß einer weiteren bevorzugten Ausführungsform ist vorgesehen, dass das Mehrkomponentensystem Farbstoffe und/oder Farbpigmente enthält. Die Farbstoffe und/oder Farbpigmente können in der Isocyanat-Komponente und/oder in der isocyanat-reaktive Komponente enthalten sein oder eine weitere Komponente des Mehrkomponentensystems darstellen.

Ebenfalls möglich ist, dass das Mehrkomponentensystem weitere Monomere umfasst, die unter Ausbildung polymerer Strukturen aushärten können. Beispiele für derartige Monomere sind Epoxide, Acrylate, Silane, Siloxane etc.

Die weiteren Monomere können eine oder mehrere zusätzliche Komponenten des Mehrkomponentensystem bilden. Sie können aber auch Teil der Isocyanat-Komponente sein, wenn sie gegenüber Isocyanat-Gruppen inert sind. Ebenso können sie Teil der isocyanat-reaktiven-Komponente sein, wenn sie gegenüber isocyanat-reaktiven-Gruppen inert sind.

Vorteilhaft ist auch, wenn das Mehrkomponentensystem einen Festkörpergehalt von $\geq$ 20 Gew.-%, bevorzugt $\geq$ 50 Gew.-%, besonders bevorzugt $\geq$ 90 Gew.-% und ganz besonders bevorzugt $\geq$ 99 Gew.-% aufweist.

Das erfindungsgemäße Mehrkomponentensystem kann vorzugsweise zur Herstellung verdruckbarer Lacke, Klebstoffe oder Schäume eingesetzt werden. Insbesondere ist es auch möglich, das Mehrkomponentensystem zur Herstellung von dreidimensionalen Körpern, aber auch gleichmäßigen Oberflächenbeschichtungen zu verwenden. Ebenso können beispielsweise dreidimensionale Modelle unter Verwendung des erfindungsgemäßen Mehrkomponentensystem erhalten werden.

Ein weiterer Gegenstand der Erfindung ist ein Verfahren zum Verdrucken des erfindungsgemäßen Mehrkomponentensystems, bei dem die Isocyanat-Komponente und die isocyanat-reaktiven Komponente separat auf ein Substrat aufgebracht werden, so dass sie sich an mindestens einer gemeinsamen Grenzfläche berühren.

Insbesondere bedeutet separat aufgebracht, dass die Isocyanat-Komponente und die isocyanat-reaktiven Komponente vor dem Aufbringen auf das Substrat nicht vermischt werden.

Insbesondere können die Isocyanat-Komponente und/oder die isocyanat-reaktiven Komponente jeweils in der Form von Tröpfchen auf das Substrat aufgebracht werden.

Diese Tröpfchen können mit Hilfe der im Stand der Technik bekannten Methoden erzeugt und auf das Substrat appliziert werden. Geeignete Methoden sind beispielsweise der Einsatz von Eppendorf-Pipetten, die Verwendung der Aerosol-Jet-Technologie (z.B. von Optomec), die Verwendung eines Drop-on-demand-Verfahrens, z.B. Ink-Jet-Drucker mit Piezodüsen, die Verwendung eines thermischem Ink-Jet-Druckers mit Bubble-Jet-Technologie oder die Verwendung eines Continuous Ink-Jet-Verfahrens. Gemäß einer bevorzugten Ausführungsform ist vorgesehen, dass die Tröpfchen der Isocyanat-Komponente und/oder der isocyanat-reaktiven Komponente ein Volumen von $\geq$ 1 pL und $\leq$ 500 pL, besonders bevorzugt $\geq$ 2 pL und $\leq$ 200 pL und besonders bevorzugt $\geq$ 5 pL und $\leq$ 50 pL aufweisen. Mit Tröpfchen sind hier die Primärtropfen gemeint, die z.B. bei einem Druckkopf direkt an der Düse erzeugt werden. Das Volumen der Tröpfchen kann in der dem Fachmann bekannten Weise beispielsweise mit einem Dropwatcher ermittelt werden.

Generell können alle denkbaren Substrate eingesetzt werden. Besonders geeignete Substrate sind beispielsweise Papier, Holz, Metall, z.B. Aluminium, Gummi, Leder, Textilien, Schäume, Kunststoffe aller Art, z.B. Polycarbonat, Glas und Keramik.

Das erfindungsgemäße Verfahren kann vorzugsweise zur Herstellung verdruckbarer Lacke, Klebstoffe oder Schäume eingesetzt werden. Insbesondere ist es auch möglich, das Verfahren zur Herstellung von dreidimensionalen Körpern, aber auch Oberflächenbeschichtungen zu verwenden. Ebenso können beispielsweise dreidimensionale Modelle unter Verwendung des erfindungsgemäßen Verfahrens erhalten werden.

Vorteilhaft an dem erfindungsgemäßen Verfahren ist auch, dass die Komponenten ortsgenau und präzise auf das Substrat aufgetragen werden können.

Noch ein weiterer Gegenstand der Erfindung ist ein Druckprodukt, dass nach dem erfindungsgemäßen Verfahren erhältlich ist.

Die Erfindung wird im Folgenden anhand von Beispielen näher erläutert.

Beispiel 1: **Standzeiten**

Die Standzeiten wurden gemäß der oben in der Beschreibung erläuterten Methode ermittelt. Getestet wurde nach 4, 8, 16, 24 und 48 Stunden.

| | Standzeit | Erfindungsgemäß |
|---|---|---|
| Hexamethylendiisocyanat (Desmodur® H, HDI) | Standzeit > 48 h | Ja |
| Trisisocyanatononan (TIN) | Standzeit > 48 h | Ja |
| Isophorondiisocyanat (Desmodur® I, IPDI) | Standzeit > 48 h | Ja |
| $H_{12}$-MDI (Desmodur® W) | Standzeit > 48 h | Ja |

(fortgesetzt)

| | Standzeit | erfindungsgemäß |
|---|---|---|
| Methylendiphenyldiisocyanat (Desmodur® PU 1806, MDI) | 8h <Standzeit < 16 h | Nein |
| Toluoldiisocyanat (Desmodur® T 80, TDI) | 4h< Standzeit < 8 h | Nein |
| HD I-Isocyanurat, 70 %ig in Butylacetat (Desmodur® N3600, 70 % in Butylacetat) | Standzeit > 48 h | Ja |
| HDI-Uretdion (Desmodur® XP2730) | Standzeit > 48 h | Ja |
| 1,3-Butandiol | Standzeit >48 h | Ja |
| Desmophen® NH1220 (Asparaginsäureseter) | Standzeit >48 h | Ja |
| Desmophen® NH1420 (Asparaginsäureseter) | Standzeit >48 h | Ja |
| 1/1 Mischung aus Desmophen® NH1220 und Desmophen® NH1420 | Standzeit > 48h | Ja |
| Desmophen® NH1220 ist der Asparaginsäureester den man erhält, wenn man 2-Methylpentamethylendiamin mit Maleinsäurediethylester umsetzt. Desmophen® NH1420 ist der Asparaginsäureester den man erhält, wenn man $H_{12}$-MDA mit Maleinsäurediethylester umsetzt. | | |

**Beispiel 2: Topfzeiten**

Die Topfzeiten wurden gemäß der oben in der Beschreibung erläuterten Methode bei einer Temperatur von 23 °C ermittelt.

Formulierung:

| Polyol [g] + Isocyanat [g] | Desmodur® N3600 70%ig in Butylacetat (HDI- Isocyanurat) | Desmodur® XP2730 (HDI- Uretdion) |
|---|---|---|
| 1,4-Butandiol | 1,03 + 5,97 | 1,372 + 5,628 |
| 1,4-Butandiol mit 0,1 Gew.-% Dibutylzinndilaurat | 1,03 + 5,97 | 1,372 + 5,628 |
| Desmophen® VPLS 2249/1 (Polyesterpolyol) | 2,08 + 4,92 | 2,605 + 4,395 |
| Desmophen® VPLS 2249/1 mit 0,1 Gew.-% Dibutylzinndilaurat | 2,08 + 4,92 | 2,605 + 4,395 |
| Desmophen® NH1220 (Asparaginsäure ester) | 3,31 +3,69 | 3,908 + 3,092 |
| 1/1 (Gewicht) Mischung aus Desmophen® NH1220 und Desmophen® NH1420 | 3,445 + 3,555 | 4,046 + 2,954 |
| 1/3 (Gewicht) Mischung aus Desmophen® NH1220 und Desmophen® NH1420 | 3,52 + 3,48 | 4,115 + 2,885 |
| 1/9 (Gewicht) Mischung aus Desmophen® NH1220 und Desmophen® NH1420 | 3,57 + 3,43 | 4,162 + 2,838 |

Topfzeit:

| Topfzeit [s] bei 23 °C | Desmodur® N3600 70 %ig in Butylacetat (HDI- Isocyanurat) | Desmodur® XP2730 (HDI- Uretdion) |
|---|---|---|
| 1,4-Butandiol | > 2.000 (> 33 Minuten) | >2.000 (> 33 Minuten) |
| 1,4-Butandiol mit 0,1 Gew.-% Dibutylzinndilaurat | > 2.000 (> 33 Minuten) | >2.000 (> 33 Minuten) |
| Desmophen® VPLS 2249/1 (Polyesterpolyol) | 1352 | > 2.000 (> 33 Minuten) |
| Desmophen® VPLS 2249/1 mit 0,1 Gew.-% Dibutylzinndilaurat | 180 | 418 |
| Desmophen® NH1220 (Asparaginsäure ester) | 26 | nicht messbar |
| 1/1 (Gewicht) Mischung aus Desmophen® NH1220 und Desmophen® NH1420 | 54 | 46 |
| 1/3 (Gewicht) Mischung aus Desmophen® NH1220 und Desmophen® NH1420 | 98 | 86 |
| 1/9 (Gewicht) Mischung aus Desmophen® NH1220 und Desmophen® NH1420 | 162 | 174 |

Die Beispiele mit 1,4-Butandiol, sowohl unkatalysiert als auch mit 0,1 Gew.-% Dibutylzinndilaurat katalysiert, durchgeführt bei 23 °C, sind nicht erfindungsgemäß, da die Topfzeit größer ist als 30 Minuten. Dies gilt auch für das unkatalysierte System Desmophen® VPLS 2249/1 mit Desmodur® XP2730.

**Beispiel** 3: **Hansen Löslichkeitsparameter**

Die Hansen Löslichkeitsparameter wurden gemäß der oben in der Beschreibung erläuterten Methode ermittelt.
In den folgenden Tabelle sind zur Verdeutlichung einige Hansen Löslichkeitsparameter zusammengestellt und der Abstand Ra zwischen zwei Verbindungen berechnet. Erfindungsgemäße sind mit (+) und nicht erfindungsgemäße Werte mit (-) gekennzeichnet.

Hansen Löslichkeitsparameter:

| | | $\delta D$ | $\delta P$ | $\delta H$ |
|---|---|---|---|---|
| **Hexamethylendiisocyanat (Desmodur® H, HDI)** | (b) | 16,7 | 7,4 | 5,0 |
| **Methylendiphenyldiisocyanat (Desmodur® PU 1806, MDI)** | (T) | 19,5 | 4,1 | 1,7 |
| **Hexamethylendiisocynatisocyanorat (Desmodur® N3600)** | (b) | 16,0 | 0 | 7,9 |
| **Desmophen® 1100 (Polyesterpolyol)** | (T) | 16,0 | 13,1 | 11,4 |
| **Desmophen® 1150 (Polyesterpolyol)** | (T) | 20,6 | 7,8 | 13,1 |
| **1,4-Butandiol** | (T) | 16,6 | 11,0 | 20,9 |
| **Glykol** | (T) | 17,0 | 11,0 | 26,0 |
| **Glyzerin** | (T) | 17,4 | 11,3 | 27,2 |
| **Desmophen® NH1220 (Asparaginsäureester)** | (b) | 15,4 | 5,0 | 5,9 |
| **Desmophen® NH1420 (Asparaginsäureester)** | (b) | 15,8 | 5,1 | 4,8 |
| **Wasser** | (T) | 15,5 | 16,0 | 42,0 |

Abstand Ra:

|  | HDI | MDI | Desmodur® N3600 |
|---|---|---|---|
| **Desmophen® 1100 (Polyesterpolyol)** | 8,7 (+) | 15,0 (+) | 13,6 (+) |
| **Desmophen® 1150 (Polyesterpolyol)** | 11,3 (+) | 12,2 (+) | 13,1 (+) |
| **1,4-Butandiol** | 16,3 (+) | 21,2 (+) | 17,1 (+) |
| **Glykol** | 21,3 (+) | **25,8 (-)** | 21,3 (+) |
| **Glyzerin** | 22,6 (+) | **26,8 (-)** | 22,5 (+) |
| **Desmophen® NH1220 (Asparaginsäureester)** | 3,7 (+) | 9,3 (+) | 5,5 (+) |
| **Desmophen® NH1420 (Asparaginsäureester)** | 2,9 (+) | 8,1 (+) | 6,0 (+) |
| **Wasser** | **38,1 (-)** | **42,8 (-)** | **37,7 (-)** |

**Beispiel** 4: **Oberflächenspannung**

Zur Auftragung der Komponenten auf die Substrate wurde ein Dimatix DMP-2831 Drucker mit dem Druckkopf DMC-11610 verwendet. Der verwendete Druckkopf hat 16 Düsen und erzeugt nominell Tropfen von einem Volumen von 10 pL. Der Druckprozess umfasste folgende Schritte:

> ➤ Druckkopf befüllen und in den Drucker einbauen
> ➤ Mindestens 2 Sekunden spülen
> ➤ Erzeugte Tropfen mit der eingebauten Kamera (Dropwatcher) überprüfen
> ➤ Wave-Form anpassen bis einzelne, gleichgroße Tropfen erzeugt werden
> ➤ Zu bedruckendes Substrat (hier Glasplatte) in den Drucker legen
> ➤ Druck starten

Da der Dimatixdrucker nur einen Druckkopf hat, wurde zunächst die Amin-Komponente gedruckt, der Druckkopf gewechselt, und anschließend die Isocyanat-Komponente gedruckt. Bei diesem Druckexperiment wurde mit der einheitlichen Auflösung von 1106 dpi (dot per inch) gedruckt:

Verwendete Produkte:

|  | Komponente 1 | Komponente 1a | Komponente 2 | Komponente 2a |
|---|---|---|---|---|
| **Harz**<br>Desmodur® N3600<br>Desmophen® NH1220 | 70,00 g | 70,00 g | 100,00 g | 100,00 g |
| Lösungsmittel<br>Butylacetat | 30,00 g | 30,00 g |  |  |
| **Additive**<br>Byk® 307<br>Byk® 331<br>Byk® 141<br>**Total**<br>**Oberflächenspannung** | 100,00 g<br>31,5 mN/m | 0,13 g<br>0,40 g<br>100,53 g<br>25,5 mN/m | 100,00 g<br>34,8 mN/m | 0,12 g<br>0,40 g<br>100,52 g<br>24,4 mN/m |

Die Oberflächenspannungswerte der verwendeten Flüssigkeiten wurden mit einem K 12 Tensiometer der Fa. Krüss gemäß DIN EN 14370:2004-11 (Beschreibung der Messung mit Platte) ermittelt. Es wurde die Messmethode nach Wilhelmy mit einem Platte-System bei einer Messtemperatur von 23 °C verwendet. Bei der Messung der Oberflächenspannung wird eine Platte aus Platin verwendet.

| Beispiele | Komponente | Komponente | Substrat | Ergebnis |
|---|---|---|---|---|
| 1 | 1 | 2 | Glas | Schlechter Verlauf (Figur 1) |

(fortgesetzt)

| Beispiele | Komponente | Komponente | Substrat | Ergebnis |
|---|---|---|---|---|
| 2 | 1a | 2a | Glas | Homogener Film (Figur 2) |
| 3 | 1 | 2 | Polycarbonat | Schlechter Verlauf (Figur 3) |
| 4 | 1a | 2a | Polycarbonat | Homogener Film (Figur 4) |

Alle gedruckten Schichten waren nach 1 Stunde Temperierzeit bei 80°C und 100 % relativer Luftfeuchte zu nicht klebrigen Beschichtungen ausgehärtet. Die Qualität der erhaltenen Beschichtungen wurde optisch bewertet.

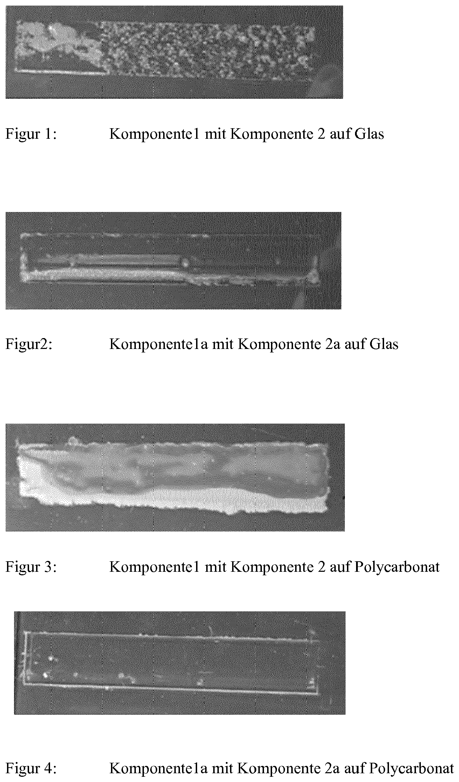

Bei Verwendung von Komponenten mit einer nicht erfindungsgemäßen Oberflächenspannung (Beispiele 1 und 3) entstanden keine homogenen und klaren Filme. Beispiel 1 führte zu einem sehr inhomogenen und unruhigen Film auf Glas (Figur 1). Beispiel 3 führte zu einem inhomogenen und eingetrübten Film (Figur 3).Nur mit den die erfindungsgemäße Oberflächenspannung aufweisenden Systemen (Beispiele. 2 und 4) konnten homogene, gleichmäßige und klare Filme auf Glas bzw. Polycarbonat hergestellt werden (Figur 2 und Figur 4).

**Beispiel 5: Verdrucken erfindungsgemäßer Systeme**

Als Beispiel für das Verdrucken erfindungsgemäßer Systeme wird das System Desmodur® N3600 in Verbindung mit Desmophen® NH1220 beschrieben. In der folgenden Tabelle werden die unterschiedlichen relevanten Parameter wie Aushärtebedingung, Topfzeit bei Aushärtebedingungen, Standzeit der beiden Komponenten, Viskosität der Komponenten bei 70°C und der Abstand Ra der Hansen Löslichkeitsparameter aufgeführt:

| | |
|---|---|
| Aushärtungsbedingungen | 23 °C |
| Topfzeit bei 23 °C | 26 s |
| Standzeit Desmophen® NH1220 | > 48 h |
| Standzeit Desmodur® N3600, 70 % in Butylacetat | > 48 h |
| Viskosität von Desmophen® NH1220 bei 70 °C | 12 mPa·s |
| Viskosität von Desmodur® N3600, 70 % in Butylacetat, bei 70 °C | 6,8 mPa·s |
| Ra der 100 %igen Verbindungen | 5,5 |

Neben dem reinen Desmophen® NH1220 wurden auch pigmentierte Systeme eingesetzt. Hierzu wurden zunächst Pigmentpasten hergestellt:

| | Paste C (Cyan) | Paste M (Magenta) | Paste Y (Gelb) | Paste K (Schwarz) |
|---|---|---|---|---|
| **Pigmentpräparation**<br>Microlith®-K cyan<br>Microlith®-K magenta<br>Microlith®-K yellow<br>Microlith®-K black | 18,1 g | 14,7 g | 15,4 g | 18,8 g |
| **Solvent**<br>Butylacetat | 72,2 g | 73,5 g | 74,4 g | 75,0 g |
| **Additive**<br>Byktjet® 9131<br>Byktjet® 9131<br>Byktjet® 9131 | 9,7 g | 11,8 g | 10,2 g | 6,2 g |
| **Total** | 100 g | 100 g | 100 g | 100 g |
| **Dispergierung**<br>Glaskugeln<br>Mischzeit im Skandex | 40 g<br>60 min | 40 g<br>60 min | 40 g<br>60 min | 40 g<br>60 min |

Das Butylacetat wurde vorgelegt und unter Rühren mit einem Heidolph RZK 2021 Laborrührer die Pigmentpräperation zugegeben. Nach der vollständigen Zugabe der Pigmentpräparation wurde das Gemisch in ein Glasgefäß gegeben, welches zu 1/3 mit Glaskugeln gefüllt war. Anschließend wurde das Gemisch in einem Skandexmischer 60 Minuten dispergiert und über einen 100 μm Filter filtriert.

Zur Pigmentierung des Desmophen® NH1220 wurden die Pigmentpaste und das Desmophen® NH1220 zusammengegeben und erneut 20 Minuten mit Glasperlen im Skandex gemischt.

Pigmentierung des Desmophen® NH1220:

|  | Cyan | Magenta | Gelb | Schwarz |
|---|---|---|---|---|
| **Paste** Paste C | 10,13 g |  |  |  |
| Paste M |  | 10,34 g |  |  |
| Paste Y |  |  | 12,89 g |  |
| Paste K |  |  |  | 9,79 g |
| Harz Desmophen® NH1220 | 89,87 g | 89,66 g | 87,11 g | 90,21 g |
| **Total** | 100 g | 100 g | 100 g | 100 g |
| **Dispergierung** Laborrührer | 1000 1/min | 1000 1/min | 1000 1/min | 1000 1/min |
| Rührzeit | 5 min | 5 min | 5 min | 5 min |
| Glaskugeln | 30 g | 30 g | 30 g | 30 g |
| Mischzeit im Skandex | 20 min | 20 min | 20 min | 20 min |
| Oberflächenspannung [mN/m] | 33,8 | 33,6 | 33,1 | 33,7 |

Zur Auftragung der Komponenten auf eine Glasscheibe wurde ein Dimatix DMP-2831 Drucker mit dem Druckkopf DMC-11610 verwendet. Der verwendete Druckkopf hat 16 Düsen und erzeugt nominell Tropfen von einem Volumen von 10 pL. Der Druckprozess umfasste folgende Schritte:

- ➢ Druckkopf befüllen und in den Drucker einbauen
- ➢ Mindestens 2 Sekunden spülen
- ➢ Erzeugte Tropfen mit der eingebauten Kamera (Dropwatcher) überprüfen
- ➢ Wave-Form anpassen bis einzelne, gleichgroße Tropfen erzeugt werden
- ➢ Zu bedruckendes Substrat (hier Glasplatte) in den Drucker legen
- ➢ Druck starten

Da der Dimatixdrucker nur einen Druckkopf hat, wurde zunächst die Isocyanat-Komponente gedruckt, der Druckkopf gewechselt, und anschließend die isocyanat-reaktive Komponente gedruckt. Über die dpi (dot per inch) wird das Mischungsverhältnis eingestellt.

Tintenformulierungen:

|  | N3600 | Farblos | Cyan | Magenta | Gelb | Schwarz |
|---|---|---|---|---|---|---|
| **Paste** Paste C |  |  | 10,13 g |  |  |  |
| Paste M |  |  |  | 10,34 g |  |  |
| Paste Y |  |  |  |  | 12,89 g |  |
| Paste K |  |  |  |  |  | 9,79 g |
| **Harz** Desmodur® N3600 | 70,00 g |  |  |  |  |  |
| Desmophen® NH1220 |  | 100,00 g | 89,87 g | 89,66 g | 87,11 g | 90,21 g |

(fortgesetzt)

| Lösungsmittel<br>Butylacetat | 30,00 g | | | | | |
|---|---|---|---|---|---|---|
| Additive<br>Byk® 307<br>Byk® 331<br>Byk® 141 | <br><br>0,13 g<br>0,40 g | <br>0,55 g<br><br>0,40 g | <br>0,55 g<br><br>0,40 g | <br>0,55 g<br><br>0,40 g | <br>0,55 g<br><br>0,40 g | <br>0,55 g<br><br>0,40 g |
| **Total** | 100,53 g | 100,95 g | 100,95 g | 100,95 g | 100,95 g | 100,95 g |
| Oberflächenspannung [mN/m] | 25,5 | 24,4 | 22,8 | 23,8 | 23,6 | 23,5 |

Alle gedruckten Schichten sind über Nacht bei Raumtemperatur zu nicht klebrigen, gleichmäßigen Beschichtungen ausgehärtet.

**Patentansprüche**

1. Verdruckbares Mehrkomponentensystem umfassend wenigstens eine Isocyanat-Komponente und wenigstens eine isocyanat-reaktive Komponente, wobei die Isocyanat-Komponente wenigstens eine Verbindung mit aliphatisch gebundenen Isocyanat-Gruppen und die isocyanat-reaktive Komponente wenigstens eine Verbindung mit isocyanat-reaktiven Gruppen umfasst, **dadurch gekennzeichnet, dass** eine Mischung der Isocyanat-Komponente und der isocyanat-reaktiven Komponente eine Topfzeit bei einer Temperatur von 23 °C von ≤ 30 Minuten aufweist, die Isocyanat-Komponente und die isocyanat-reaktive Komponente jeweils eine Standzeit von ≥ 16 Stunden bei 20 °C und einer relativen Luftfeuchte von 50% aufweisen, die Isocyanat-Komponente und die isocyanat-reaktive Komponente jeweils eine bei 70 °C und einer konstanten Scherrate von 100 1/s gemessene Viskosität von ≤ 100 mPa·s aufweisen und der Abstand Ra zwischen dem Hansen Löslichkeitsparameter der Verbindung mit aliphatisch gebundenen Isocyanat-Gruppen oder gegebenenfalls einer Mischung aller Verbindung mit Isocyanat-Gruppen und dem Hansen Löslichkeitsparameter der Verbindung mit isocyanat-reaktiven Gruppen oder gegebenenfalls einer Mischung aller Verbindungen mit isocyanat-reaktiven Gruppen ≤ 25 ist und wobei die Oberflächenspannung der Isocyanat und/oder isocyanat-reaktiven Komponente ≤ 30 mN/m bei 23 °C, bestimmt gemäß DIN EN 14370:2004-11, Messung mit Platte, ist,
wobei die Topfzeit die Zeit ist, in der sich die Viskosität der Mischung aus der Isocyanat-Komponente und der isocyanat-reaktiven Komponente bei einer Temperatur von 23 °C verdoppelt,
wobei die Standzeit die Zeitspanne ist, für die ein Druckvorgang, bei dem die Isocyanat-Komponente und die isocyanat-reaktive Komponente mit einem Druckkopf verdruckt werden, bei 20 °C und 50% relativer Luftfeuchte unterbrochen werden kann, ohne dass die Druckqualität bei Wiederaufnahme des Drucks beeinträchtigt wird.

2. Mehrkomponentensystem nach Anspruch 1, **dadurch gekennzeichnet, dass** das Verhältnis der Isocyanat-Gruppen zu den isocyanat-reaktiven Gruppen 0,5 bis 2,0, bevorzugt 0,85 bis 1,5 und besonders bevorzugt 0,95 bis 1,1 beträgt.

3. Mehrkomponentensystem nach Anspruch 1 oder 2, **dadurch gekennzeichnet, dass** die Summe der Verbindungen mit Isocyanat-Gruppen eine zahlenmittlere Funktionalität an Isocyanatgruppen ≥ 1,5, bevorzugt ≥ 2, besonders bevorzugt ≥ 2,5 und ganz besonders bevorzugt ≥ 3,0 aufweist.

4. Mehrkomponentensystem nach einem der Ansprüche 1 bis 3, **dadurch gekennzeichnet, dass** die Summe der Verbindungen mit isocyanat-reaktiven Gruppen eine zahlenmittlere Funktionalität an isocyanat-reaktiven Gruppen ≥ 1,5, bevorzugt ≥ 2 und besonders bevorzugt ≥ 2,5 aufweist.

5. Mehrkomponentensystem nach einem der Ansprüche 1 bis 4, **dadurch gekennzeichnet, dass** die Isocyanat-Komponente und die isocyanat-reaktiven Komponente jeweils eine bei 70 °C gemessene Viskosität von ≤ 50 mPa·s, bevorzugt ≤ 30 mPa·s besonders bevorzugt ≤ 20 mPa·s und ganz besonders bevorzugt ≤ 15 mPa·s aufweisen.

6. Mehrkomponentensystem nach einem der Ansprüche 1 bis 5, **dadurch gekennzeichnet, dass** die Mischung der Isocyanat-Komponente und der isocyanat-reaktiven Komponente eine Topfzeit bei einer Temperatur von 23 °C von ≤ 10 Minuten, bevorzugt von ≤ 1 Minute und besonders bevorzugt von ≤ 10 Sekunden aufweist.

7. Mehrkomponentensystem nach einem der Ansprüche 1 bis 6, **dadurch gekennzeichnet, dass** der Abstand Ra ≥ 8, bevorzugt ≥ 12, besonders bevorzugt ≥ 16 ist.

8. Mehrkomponentensystem nach einem der Ansprüche 1 bis 7, **dadurch gekennzeichnet, dass** die Isocyanat-Komponente und die isocyanat-reaktive Komponente jeweils eine Standzeit ≥ 20 Stunden, bevorzugt ≥ 24 Stunden, besonders bevorzugt ≥ 32 Stunden und ganz besonders bevorzugt ≥ 48 Stunden aufweisen.

9. Mehrkomponentensystem nach einem der Ansprüche 1 bis 8, **dadurch gekennzeichnet, dass** die Isocyanat-Komponente und die isocyanat-reaktive Komponente jeweils eine Oberflächenspannung bei 23 °C von ≤ 30 mN/m, bestimmt gemäß DIN EN 14370:2004-11, Messung mit Platte, aufweisen.

10. Mehrkomponentensystem nach einem der Ansprüche 1 bis 8, **dadurch gekennzeichnet, dass** die Isocyanat-Komponente und die isocyanat-reaktive Komponente jeweils eine Oberflächenspannung bei 23 °C von ≥ 10 und ≤ 28 mN/m, bestimmt gemäß DIN EN 14370:2004-11, Messung mit Platte, aufweisen.

11. Mehrkomponentensystem nach einem der Ansprüche 1 bis 10, **dadurch gekennzeichnet, dass** die die Isocyanat-Komponente und/oder die isocyanat-reaktive Komponente ein Netzmittel und/oder Oberflächenmodifikationsmittel enthalten.

12. Mehrkomponentensystem nach einem der Ansprüche 1 bis 11, **dadurch gekennzeichnet, dass** die die Isocyanat-Komponente und/oder die isocyanat-reaktive Komponente ein Lösungsmittel enthalten.

13. Mehrkomponentensystem nach einem der Ansprüche 1 bis 12, **dadurch gekennzeichnet, dass** es einen Festkörpergehalt von ≥ 20 Gew.-%, bevorzugt ≥ 50 Gew.-%, besonders bevorzugt ≥ 90 Gew.-%, und ganz besonders bevorzugt ≥ 99 Gew.-% aufweist.

14. Verfahren zum Verdrucken eines Mehrkomponentensystems nach einem der Ansprüche 1 bis 13, **dadurch gekennzeichnet, dass** die Isocyanat-Komponente und die isocyanat-reaktiven Komponente separat auf ein Substrat aufgebracht werden, so dass sie sich an mindestens einer gemeinsamen Grenzfläche berühren.

15. Verfahren nach Anspruch 14, **dadurch gekennzeichnet, dass** die Isocyanat-Komponente und/oder die isocyanat-reaktiven Komponente in der Form von Tröpfchen auf das Substrat aufgebracht werden.

16. Verfahren nach Anspruch 15, **dadurch gekennzeichnet, dass** die Tröpfchen der Isocyanat-Komponente und/oder der isocyanat-reaktiven Komponente ein Volumen von ≥ 1 pL und ≤ 500 pL, bevorzugt ≥ 2 pL und ≤ 200 pL und besonders bevorzugt ≥ 5 pL und ≤ 50 pL aufweisen.

17. Verfahren nach einem der Ansprüche 14 bis 16, **dadurch gekennzeichnet, dass** die Komponente mit der höheren Oberflächenspannung in einem ersten Schritt auf das Substrat aufgebracht wird.

18. Druckprodukt, erhältlich nach einem Verfahren gemäß einem der Ansprüche 14 bis 17.

**Claims**

1. Printable multicomponent system comprising at least one isocyanate component and at least one isocyanate-reactive component, wherein the isocyanate component comprises at least one compound having aliphatically bonded isocyanate groups and the isocyanate-reactive component comprises at least one compound having isocyanate-reactive groups, **characterized in that** a mixture of the isocyanate component and isocyanate-reactive component has a pot life at a temperature of 23°C of ≤ 30 minutes, the isocyanate component and the isocyanate-reactive component each have a use life of ≥16 hours at 20°C and a relative humidity of 50%, the isocyanate component and the isocyanate-reactive component each have a viscosity measured at 70°C and a constant shear rate of 100 1/s of ≤ 100 mPas and the gap Ra between the Hansen solubility parameter of the compound having aliphatically bonded isocyanate groups or optionally a mixture of all compounds having isocyanate groups and the Hansen solubility parameter of the compound having isocyanate-reactive groups or optionally a mixture of all compounds having isocyanate-reactive groups is ≤ 25 and wherein the surface tension of the isocyanate and/or isocyanate-reactive component is ≤ 30 mN/m at 23°C determined according to DIN EN 14370:2004-11, measurement with plate, wherein the pot life is the time in which the viscosity of the mixture of the isocyanate component and the isocyanate-reactive component doubles at a temperature of 23°C,
wherein the use life is the duration for which a printing operation where the isocyanate component and the isocyanate-reactive component are printed with a printing head may be interrupted at 20°C and 50% relative humidity without printing quality being impaired upon resumption of printing.

2. Multicomponent system according to Claim 1, **characterized in that** the ratio of the isocyanate groups to the isocyanate-reactive groups is 0.5 to 2.0, preferably 0.85 to 1.5 and particularly preferably 0.95 to 1.1.

3. Multicomponent system according to Claim 1 or 2, **characterized in that** the sum of the compounds having isocyanate groups has a number-average functionality of isocyanate groups $\geq 1.5$, preferably $\geq 2$, particularly preferably $\geq 2.5$ and very particularly preferably $\geq 3.0$.

4. Multicomponent system according to any of Claims 1 to 3, **characterized in that** the sum of the compounds having isocyanate-reactive groups has a number-average functionality of isocyanate-reactive groups $\geq 1.5$, preferably $\geq 2$ and particularly preferably $\geq 2.5$.

5. Multicomponent system according to any of Claims 1 to 4, **characterized in that** the isocyanate component and the isocyanate-reactive component each have a viscosity measured at 70°C of $\leq 50$ mPas, preferably $\leq 30$ mPas, particularly preferably $\leq 20$ mPas and very particularly preferably $\leq 15$ mPas.

6. Multicomponent system according to any of Claims 1 to 5, **characterized in that** the mixture of the isocyanate component and the isocyanate-reactive component has a pot life at a temperature of 23°C of $\leq 10$ minutes, preferably of $\leq 1$ minute and particularly preferably of $\leq 10$ seconds.

7. Multicomponent system according to any of Claims 1 to 6, **characterized in that** the gap Ra is $\geq 8$, preferably $\geq 12$, particularly preferably $\geq 16$.

8. Multicomponent system according to any of Claims 1 to 7, **characterized in that** the isocyanate component and the isocyanate-reactive component each have a use life of $\geq 20$ hours, preferably $\geq 24$ hours, particularly preferably $\geq 32$ hours and very particularly preferably $\geq 48$ hours.

9. Multicomponent system according to any of Claims 1 to 8, **characterized in that** the isocyanate component and the isocyanate-reactive component each have a surface tension at 23°C of $\leq 30$ mN/m determined according to DIN EN 14370:2004-11, measurement with plate.

10. Multicomponent system according to any of Claims 1 to 8, **characterized in that** the isocyanate component and the isocyanate-reactive component each have a surface tension at 23°C of $\geq 10$ and $\leq 28$ mN/m determined according to DIN EN 14370:2004-11, measurement with plate.

11. Multicomponent system according to any of Claims 1 to 10, **characterized in that** the isocyanate component and/or the isocyanate-reactive component contain a crosslinker and/or surface modifier.

12. Multicomponent system according to any of Claims 1 to 11, **characterized in that** the isocyanate component and/or the isocyanate-reactive component contain a solvent.

13. Multicomponent system according to any of Claims 1 to 12, **characterized in that** it has a solids content of $\geq 20\%$ by weight, preferably $\geq 50\%$ by weight, particularly preferably $\geq 90\%$ by weight and very particularly preferably $\geq 99\%$ by weight.

14. Process for printing a multicomponent system according to any of Claims 1 to 13, **characterized in that** the isocyanate component and the isocyanate-reactive component are applied to a substrate separately so that they contact one another at at least one common interface.

15. Process according to Claim 14, **characterized in that** the isocyanate component and/or the isocyanate-reactive component are applied to the substrate in the form of droplets.

16. Process according to Claim 15, **characterized in that** the droplets of the isocyanate component and/or of the isocyanate-reactive component have a volume of $\geq 1$ pl and $\leq 500$ pl, preferably $\geq 2$ pl and ^ 200 pl and particularly preferably ≥ 5 pl and ≤ 50 pl.

**17.** Process according to any of Claims 14 to 16, **characterized in that** the component having the higher surface tension is applied to the substrate in a first step.

**18.** Printed product obtainable by a process according to any of Claims 14 to 17.

**Revendications**

**1.** Système imprimable à plusieurs composants comprenant au moins un composant de type isocyanate et au moins un composant réactif envers isocyanate, le composant de type isocyanate comprenant au moins un composé doté de groupes isocyanate liés de manière aliphatique et le composant réactif envers isocyanate comprenant au moins un composé doté de groupes réactifs envers isocyanate, **caractérisé en ce qu'**un mélange du composant de type isocyanate et du composant réactif envers isocyanate présente un temps de vie en pot à une température de 23 °C de ≤ 30 minutes, le composant de type isocyanate et le composant réactif envers isocyanate présentant à chaque fois une longévité de ≥16 heures à 20 °C et à une humidité relative de l'air de 50 %, le composant de type isocyanate et le composant réactif envers isocyanate présentant à chaque fois une viscosité de ≤ 100 mPa·s mesurée à 70 °C et à un taux de cisaillement constant de 100 1/s et la distance Ra entre le paramètre de solubilité d'Hansen du composé doté de groupes isocyanate liés de manière aliphatique ou éventuellement d'un mélange de tous les composés dotés de groupes isocyanate et le paramètre de solubilité d'Hansen du composé doté de groupes réactifs envers isocyanate ou éventuellement d'un mélange de tous les composés dotés de groupes réactifs envers isocyanate étant ≤ 25 et la tension de surface du composant de type isocyanate et/ou réactif envers isocyanate étant ≤ 30 mN/m à 23 °C, déterminée selon la norme DIN EN 14370:2004-11, mesure avec plaque, le temps de vie en pot étant le temps dans lequel la viscosité du mélange du composant de type isocyanate et du composant réactif envers isocyanate est doublée à une température de 23 °C, la longévité étant l'intervalle de temps pour lequel un processus d'impression, dans lequel le composant de type isocyanate et le composant réactif envers isocyanate sont imprimés avec une tête d'impression, peut être interrompu à 20 °C et à 50 % d'humidité relative de l'air sans que la qualité d'impression ne soit affectée par la reprise de l'impression.

**2.** Système à plusieurs composants selon la revendication 1, **caractérisé en ce que** le rapport des groupes isocyanate sur les groupes réactifs envers isocyanate est de 0,5 à 2,0, préférablement 0,85 à 1,5 et particulièrement préférablement 0,95 à 1,1.

**3.** Système à plusieurs composants selon la revendication 1 ou 2, **caractérisé en ce que** la somme des composés dotés de groupes isocyanate présente une fonctionnalité moyenne en nombre de groupes isocyanate ≥ 1,5, préférablement ≥ 2, particulièrement préférablement ≥ 2,5 et tout particulièrement préférablement ≥ 3,0.

**4.** Système à plusieurs composants selon l'une quelconque des revendications 1 à 3, **caractérisé en ce que** la somme des composés dotés de groupes réactifs envers isocyanate présente une fonctionnalité moyenne en nombre de groupes réactifs envers isocyanate ≥ 1,5, préférablement ≥ 2 et particulièrement préférablement ≥ 2,5.

**5.** Système à plusieurs composants selon l'une quelconque des revendications 1 à 4, **caractérisé en ce que** le composant de type isocyanate et le composant réactif envers isocyanate présentent à chaque fois une viscosité mesurée à 70 °C de ≤ 50 mPa·s, préférablement ≤ 30 mPa·s, particulièrement préférablement ≤ 20 mPa·s et tout particulièrement préférablement ≤ 15 mPa·s.

**6.** Système à plusieurs composants selon l'une quelconque des revendications 1 à 5, **caractérisé en ce que** le mélange du composant de type isocyanate et du composant réactif envers isocyanate présente un temps de vie en pot à une température de 23 °C de ≤ 10 minutes, préférablement de ≤ 1 minute et particulièrement préférablement de ≤ 10 secondes.

**7.** Système à plusieurs composants selon l'une quelconque des revendications 1 à 6, **caractérisé en ce que** la distance Ra est ≥ 8, préférablement ≥ 12, particulièrement préférablement ≥ 16.

**8.** Système à plusieurs composants selon l'une quelconque des revendications 1 à 7, **caractérisé en ce que** le composant de type isocyanate et le composant réactif envers isocyanate présentent à chaque fois une longévité ≥ 20 heures, préférablement ≥ 24 heures, particulièrement préférablement ≥ 32 heures et tout particulièrement préférablement ≥ 48 heures.

9. Système à plusieurs composants selon l'une quelconque des revendications 1 à 8, **caractérisé en ce que** le composant de type isocyanate et le composant réactif envers isocyanate présentent à chaque fois une tension de surface à 23 °C de ≤ 30 mN/m, déterminée selon la norme DIN EN 14370:2004-11, mesure avec plaque.

10. Système à plusieurs composants selon l'une quelconque des revendications 1 à 8, **caractérisé en ce que** le composant de type isocyanate et le composant réactif envers isocyanate présentent à chaque fois une tension de surface à 23 °C de ≥ 10 et ≤ 28 mN/m, déterminée selon la norme DIN EN 14370:2004-11, mesure avec plaque.

11. Système à plusieurs composants selon l'une quelconque des revendications 1 à 10, **caractérisé en ce que** le composant de type isocyanate et/ou le composant réactif envers isocyanate contiennent un agent mouillant et/ou un agent de modification de surface.

12. Système à plusieurs composants selon l'une quelconque des revendications 1 à 11, **caractérisé en ce que** le composant de type isocyanate et/ou le composant réactif envers isocyanate contiennent un solvant.

13. Système à plusieurs composants selon l'une quelconque des revendications 1 à 12, **caractérisé en ce qu'**il présente une teneur en solides de ≥ 20 % en poids, préférablement ≥ 50 % en poids, particulièrement préférablement ≥ 90 % en poids, et tout particulièrement préférablement ≥ 99 % en poids.

14. Procédé pour l'impression d'un système à plusieurs composants selon l'une quelconque des revendications 1 à 13, **caractérisé en ce que** le composant de type isocyanate et le composant réactif envers isocyanate sont appliqués séparément sur un substrat, de sorte qu'ils se touchent au niveau d'au moins une interface commune.

15. Procédé selon la revendication 14, **caractérisé en ce que** le composant de type isocyanate et/ou le composant réactif envers isocyanate sont appliqués sous forme de gouttelettes sur le substrat.

16. Procédé selon la revendication 15, **caractérisé en ce que** les gouttelettes du composant de type isocyanate et/ou du composant réactif envers isocyanate présentent un volume de ≥ 1 pL et ≤ 500 pL, préférablement ≥ 2 pL et ≤ 200 pL et particulièrement préférablement ≥ 5 pL et ≤ 50 pL.

17. Procédé selon l'une quelconque des revendications 14 à 16, **caractérisé en ce que** le composant doté de la tension de surface plus élevée est appliqué sur le substrat dans une première étape.

18. Produit d'impression, pouvant être obtenu selon un procédé selon l'une quelconque des revendications 14 à 17.

EP 2 930 198 B1

Figur 1: Komponente1 mit Komponente 2 auf Glas

Figur2: Komponente1a mit Komponente 2a auf Glas

Figur 3: Komponente1 mit Komponente 2 auf Polycarbonat

Figur 4: Komponente1a mit Komponente 2a auf Polycarbonat

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013165946 A
- DE 19937770 A1
- DE 102008024352 A1
- EP 0403921 A1
- US 20030118739 A1
- DE 1670666 A
- EP 0798299 A
- EP 0649866 A
- EP 0403921 B
- JP 07118263 A
- EP 1640394 A

**In der Beschreibung aufgeführte Nicht-Patentliteratur**

- Hansen Solubility Parameters: A User's Handbook. CRC Press, Inc, 2007
- HSPiP
- *J. Prakt. Chem.,* 1994, vol. 336, 185-200
- **G. OERTEL.** Polyurethane Handbook. Carl Hanser Verlag, 1994